# EUROPÄISCHE PATENTSCHRIFT

(11) **EP 1 882 654 B1**
(45) Veröffentlichungstag und Bekanntmachung des Hinweises auf die Patenterteilung: **13.10.2010**
(21) Anmeldenummer: 07013298.0
(22) Anmeldetag: 06.07.2007
(51) Int. Cl.: B65G 69/28

(54) **Überladebrücke mit Sicherheitssperre und Verfahren zum Betreiben der Überladebrücke**
Overload bridge with a safety block and method for operating the overload bridge
Pont de transbordement doté de taquets de sécurité et procédé destiné au fonctionnement du pont de transbordement

(30) Priorität: 24.07.2006 DE 102006034666
(43) Veröffentlichungstag der Anmeldung: 30.01.2008
(73) Patentinhaber: Deutsche Post AG, 53113 Bonn (DE)
(72) Erfinder: Ott, Rainer, 56745 Volkesfeld (DE); Schmatz, Johann Josef, 53881 Euskirchen (DE)
(74) Vertreter: Jostarndt, Hans-Dieter

(56) Entgegenhaltungen:
- US-A- 5 040 258
- US-A- 5 333 339

## Beschreibung

Die Erfindung betrifft eine Überladebrücke gemäß dem Oberbegriff des unabhängigen Anspruchs 1.

Die Erfindung betrifft ferner ein Verfahren zum Betreiben einer solchen Überladebrücke gemäß dem Oberbegriff des Anspruchs 8.

In Hallen für den Umschlag oder die Lagerung von Gütern sind Verladeeinrichtungen bekannt, die im Wesentlichen aus einem in die Außenhülle des Gebäudes eingebauten verladetor und einer in der Regel in der Torachse angeordneten Überladebrücke oder einer Hebebühne bestehen. Die Überladebrücke oder Hebebühne dient zur Überbrückung des Niveaus des vorhandenen Hallenbodens und der Ladefläche eines andockenden Fahrzeugs. Sie dient ferner zur Überbrückung des Abstands zwischen einer Verladerampe und einem Fahrzeug.

Bei den Überladebrücken sind verschiedene Ausführungsformen bekannt. Beispielsweise können Überladebrücken als Vorschubbrücken oder als Klappkeilbrücken ausgebildet sein. Überladebrücken mit Vorschub zeichnen sich dadurch aus, dass das heb- und senkbare Plateau der Überladebrücke nach außen hin durch einen Vorschub ergänzt wird, der sich in Plateaurichtung nach außen verschieben lässt. So können Distanzen zwischen dem Gebäude und dem davor stehenden Fahrzeug ausgeglichen werden. Das Vorschubbauteil kann in seiner Länge variabel ausgefahren werden und kompensiert dadurch den variablen Abstand zwischen einer Toranlage und einem sich davor befindlichen Fahrzeug. Beispielsweise offenbart die deutsche Gebrauchsmusterschrift DE 296 05 672 U1 eine Überladebrücke für eine Rampe mit einer Brückenplatte, die mit einer ein- und ausfahrbaren Verlängerung zum Auflegen auf eine zu be- bzw. entladende Plattform versehen ist. Die Verlängerung umfasst ein in der Brückenplatte gelagertes Vorschubteil und seitliche, im Vorschubteil gelagerte, ein- und ausfahrbare Segmente zum Verändern der Breite der Überladebrücke.

Überladebrücken mit einem Klappkeil sind üblicherweise so ausgebildet, dass sich der Klappkeil an der vorderen Kante des Plateaus befindet. Der Klappkeil wird in Ruhestellung um etwa 90° in Relation zum Plateau der Überladebrücke nach unten abgewinkelt. Zum Auflegen des Klappkeils auf die Ladefläche eines andockenden Fahrzeugs wird das Klappbauteil durch einen Stellantrieb nach oben geschwenkt.

Beispielsweise offenbart die deutsche Gebrauchsmusterschrift DE 88 06 281 U1 eine Überladebrücke, deren Brücke an einem Gelenk gelagert ist und deren Höhe mittels hydraulischer, pneumatischer oder mechanischer Stellvorrichtungen in vertikaler Richtung verstellt werden kann. Die Brücke kann einen zusätzlichen Klappkeil umfassen, der ebenfalls durch hydraulische, pneumatische oder mechanische Stellvorrichtungen bewegt werden kann.

Auch die deutsche Gebrauchsmusterschrift DE 79 18 512 U1 beschreibt eine Verladerampe mit einer hydraulisch schwenkbaren Überfahrlippe.

In der Regel sind die Platzverhältnisse in einem Logistikgebäude begrenzt, so dass nach Möglichkeit alle zur Verfügung stehenden Flächen zur Lagerung von Waren genutzt werden. Dies schließt auch die Bereiche der Überladebrücken und Hebebühnen ein, die sich im Innern des Gebäudes vor den Toranlagen befinden. Im Zuge der möglichst optimalen Ausnutzung der Lagerflächen werden Güter dabei oftmals auf eine Überladebrücke gefahren oder geschoben, wobei es dazu kommen kann, dass die Torflügel selbst angefahren oder angestoßen werden. Dabei kann es zu Schäden an den Torflügeln und Führungen kommen. Ferner werden auch Rollbehälter in diesen Bereichen abgestellt. Wenn das Niveau zum Tor hin leicht abschüssig ist, können die Rollbehälter bei offenem Tor aus diesem herausrollen und von der Verladerampe fallen. Hierdurch entsteht eine erhebliche Unfallgefahr.

Aus der deutschen Patentanmeldung DE 101 57 795 A1 ist dazu eine Überladebrücke bekannt, die in der Ruhestellung im Bereich des freien Endes der Überladebrücke mindestens eine Stoßkante aufweist. Die Stoßkante weist einen Antrieb auf, der die Stoßkante beim Erreichen der Ruhestellung automatisch in eine Stellung verbringt, in der sie ihre Wirkung entfalten kann. Durch die bekannte Überladebrücke kann zwar das Herabfallen von Rollbehältern von der vorderen Kante der Brücke verhindert werden. Da sich eine Toranlage üblicherweise in einem Abstand zum freien Ende einer Überladebrücke befindet, kann beispielsweise das Anstoßen von Rollbehältern an eine geschlossene Toranlage jedoch nicht verhindert werden.

Ferner offenbart die US-Patentschrift US 5,333,339 eine gattungsgemäße Überladebrücke und ein gattungsgemäßes Verfahren zum Betreiben einer Überladebrücke, mit einer schwenkbar gelagerten Sperrplatte innerhalb der Fläche einer Überladebrücke, die durch Bewegung eines Klappteils am vorderen Rand der Überladebrücke zwischen einer Betriebsstellung einer Ruhestellung bewegt wird. Befindet sich das Klappteil nach unten geklappt in der Ruhestellung, ragt die Sperrplatte nach oben aus der Überladebrücke heraus. In der Betriebsstellung der Überladebrücke ist das Klappteil nach oben verfahren, wodurch die Sperrplatte über ein Gestänge nach unten geklappt wird und bündig in eine Aussparung in der Überladebrücke versenkt wird.

Aufgabe der Erfindung ist es daher, eine Überladebrücke in Ruhestellung dagegen abzusichern, dass Gegenstände ab einem bestimmten Punkt auf die Überladebrücke bewegt werden können, wobei gegenüber dem Stand der Technik eine verbesserte Ausführungsform bereitgestellt werden soll.

Aufgabe der Erfindung ist es ferner, ein Verfahren zum Betrieb einer solchen Überladebrücke bereitzustellen.

Erfindungsgemäß wird diese Aufgabe durch eine Überladebrücke mit den Merkmalen des unabhängigen Anspruchs 1 gelöst. Vorteilhafte weiterbildungen der Überladebrücke ergeben sich aus den Unteransprüchen 2-7. Die Aufgabe wird ferner durch ein Verfahren nach Anspruch 8 gelöst. Vorteilhafte Ausführungsformen des Verfahrens ergeben sich aus den Unteransprüchen 9-15.

Die Erfindung sieht vor, vor einer Toranlage eine zwangsläufig gesteuerte, hochfahrbare Sperre in eine Überladebrücke einzubauen. Die Sperre ist nicht, wie aus dem Stand der Technik bekannt, an der Kante der vorderen Überladebrücke angebracht, sondern sie ist so innerhalb der Brückenfläche angeordnet, dass sie sich bei geschlossener Toranlage im geschlossenen Gebäudebereich befindet. Die Sperre schützt zum einen das Tor gegen den Aufprall von Gegenständen. Zum anderen verhindert sie das Herausrollen von Rollbehältern oder auf Rollen gelagerten Gütern aus dem Tor. Bei Nutzung der Überladebrücke wird diese Sperre aus- bzw. eingefahren.

Die erfindungsgemäße Überladebrücke umfasst eine Brückenplatte und eine bewegliche, plattenförmige Brückenerweiterung, die sich auf der einem Gebäude abgewandten Seite der Brückenplatte befindet. Die Brückenerweiterung ist zwischen einer Betriebsstellung und einer Ruhestellung bewegbar, wobei die Brückenplatte in der Betriebsstellung durch die Brückenerweiterung wenigstens auf der dem Gebäude abgewandten Seite vergrößerbar ist.

Die Erfindung sieht vor, dass sich innerhalb der Fläche der Brückenplatte mindestens eine Aussparung befindet, in der eine Sperrvorrichtung anbeordnet ist. Die Sperrvorrichtung wird aus wenigstens zwei in einem Winkel zueinander stehenden Bauteilen gebildet, die entlang ihrer Stoßkante drehbar um eine Achse gelagert sind. Die Sperrvorrichtung besteht aus einem Sperrbauteil, das als Sperre dient und einem Stellbauteil, über das die Sperre angesteuert wird.

Das Stellbauteil ist mechanisch an die Brückenerweiterung koppelbar und die Sperrvorrichtung ist in der Betriebsstellung der Brückenerweiterung so positioniert, dass das Sperrbauteil der Sperrvorrichtung in der Ebene der Brückenplatte liegt. Die Sperrvorrichtung ist ferner in der Ruhestellung der Brückenerweiterung mittels einer mechanischen Kopplung des Stellbauteils an die Brückenerweiterung so positioniert, dass das Sperrbauteil der Sperrvorrichtung nach oben aus der Brückenplatte herausragt.

Erfindungsgemäß ist die Sperrvorrichtung als Winkelprofil aus zwei Platten gebildet, das an der Stoßkante der Platten um eine Drehachse gelagert ist. In der Platte, welche das Sperrbauteil bildet, können sich Einkerbungen befinden, die im Wesentlichen senkrecht zur Drehachse der Sperrvorrichtung verlaufen.

Vorzugsweise weist die Brückenerweiterung ein Koppelbauteil auf, das so ausgebildet ist, dass es bei einer Bewegung der Brückenerweiterung in die Ruhestellung eine Schubkraft auf das Stellbauteil der Sperrvorrichtung ausübt. Dadurch ist die Sperrvorrichtung so um die Achse drehbar, dass sich das Sperrbauteil der Sperrvorrichtung nach oben aus der Ebene der Brückenplatte hebt. Die Sperrvorrichtung ist ferner so ausgebildet, dass sich das Sperrbauteil bei einer Bewegung der Brückenerweiterung in die Betriebsstellung wieder in die Ebene der Brückenplatte absenkt.

In einem ersten Ausführungsbeispiel der Erfindung ist die Brückenerweiterung ein Vorschub, der in der Ebene der Brückenplatte verfahrbar ist. In diesem Fall kann das Koppelbauteil beispielsweise eine Platte oder Stange sein, die an dem Vorschub befestigt ist. Das Koppelbauteil ist so ausgebildet, dass es bei einer Bewegung des Vorschubs in die Ruhestellung das Stellbauteil der Sperrvorrichtung berührt und eine Druckkraft auf dieses Sperrbauteil ausübt.

In einem zweiten Ausführungsbeispiel der Erfindung ist die Brückenerweiterung ein Klappkeil, der um eine Achse kippbar ist. In diesem Fall kann das Koppelbauteil beispielsweise eine Koppelstange sein, die an ihren Enden drehbar gelagert sowohl mit dem Klappkeil als auch mit dem Stellbauteil der Sperrvorrichtung verbunden ist.

Von der Erfindung umfasst ist ferner ein Verfahren zum Betreiben der erfindungsgemäßen Überladebrücke. Das Verfahren zeichnet sich dadurch aus, dass eine Sperrvorrichtung, die wenigstens aus einem Sperrbauteil und einem Stellbauteil gebildet wird, bei einer Bewegung der Brückenerweiterung in die Ruhestellung mittels einer mechanischen Kopplung des Stellbauteils mit der Brückenerweiterung in eine Position bewegt wird, in der das Sperrbauteil der Sperrvorrichtung nach oben aus der Brückenplatte herausragt. Bei einer Bewegung der Brückenerweiterung in die Betriebsstellung wird die Sperrvorrichtung in eine Position gedreht, in der das Sperrbauteil in der Ebene der Brückenplatte liegt. Dabei ist die Sperrvorrichtung als Winkelprofil aus zwei Platten gebildet, das sich bei Bewegen der Brückenerweiterung zwischen einer Betriebsstellung und einer Ruhestellung um eine Drehachse an der Stoßkante der Platten dreht.

Vorzugsweise übt das Koppelbauteil der Brückenerweiterung bei einer Bewegung der Brückenerweiterung in die Ruhestellung eine Schubkraft auf das Stellbauteil aus. Dadurch dreht sich die Sperrvorrichtung so um ihre Drehachse, dass sich das Sperrbauteil der Sperrvorrichtung nach oben aus der Ebene der Brückenplatte hebt. Bei einer Bewegung der Brückenerweiterung in die Betriebsstellung senkt sich das Sperrbauteil in die Ebene der Brückenplatte ab.

Wird als Brückenerweiterung ein Vorschub gewählt, der in der Ebene der Brückenplatte verfahren wird, kann das Koppelbauteil beispielsweise eine Platte oder Stange sein, die an dem Vorschub befestigt ist. Das Koppelbauteil berührt bei einer Bewegung des Vorschubs in die Ruhestellung das Stellbauteil der Sperrvorrichtung und übt eine Druckkraft auf das Stellbauteil aus.

Bei einer Bewegung des Vorschubs in die Betriebsstellung dreht sich die Sperrvorrichtung durch die Schwerkraft so um ihre Drehachse, dass sich das Sperrbauteil in die Ebene der Brückenplatte absenkt.

Wird als Brückenerweiterung ein Klappkeil gewählt, der um eine Achse gekippt wird, kann das Koppelbauteil eine Koppelstange sein, die an ihren Enden drehbar gelagert sowohl mit dem Klappkeil als auch, mit dem Sperrbauteil der Sperrvorrichtung verbunden ist. Bei einer Bewegung des Klappkeils in die Ruhestellung übt die Koppelstange eine Druckkraft (Schubkraft) auf das Stellbauteil aus.

Bei einer Bewegung des Klappkeils in die Betriebsstellung übt die Koppelstange eine Zugkraft auf das Stellbauteil aus und die Sperrvorrichtung dreht sich dadurch so um die Achse, dass sich das Sperrbauteil der Sperrvorrichtung in die Ebene der Brückenplatte absenkt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein erstes Ausführungsbeispiel der Erfindung mit einer Überladebrücke und einem Vorschub in der Betriebsstellung;
- Fig. 2: das erste Ausführungsbeispiel der Erfindung mit der Überladebrücke und einem Vorschub in der Ruhestellung;
- Fig. 3: ein zweites Ausführungsbeispiel der Erfindung mit einer Überladebrücke und einem Klappkeil in der Betriebsstellung;
- Fig. 4: das zweite Ausführungsbeispiel der Erfindung mit der Überladebrücke und einem Klappkeil in der Ruhestellung;
- Fig. 5: zwei Ausführungsformen einer Sperrvorrichtung; und
- Fig. 6: eine Aufsicht auf eine Überladebrücke.

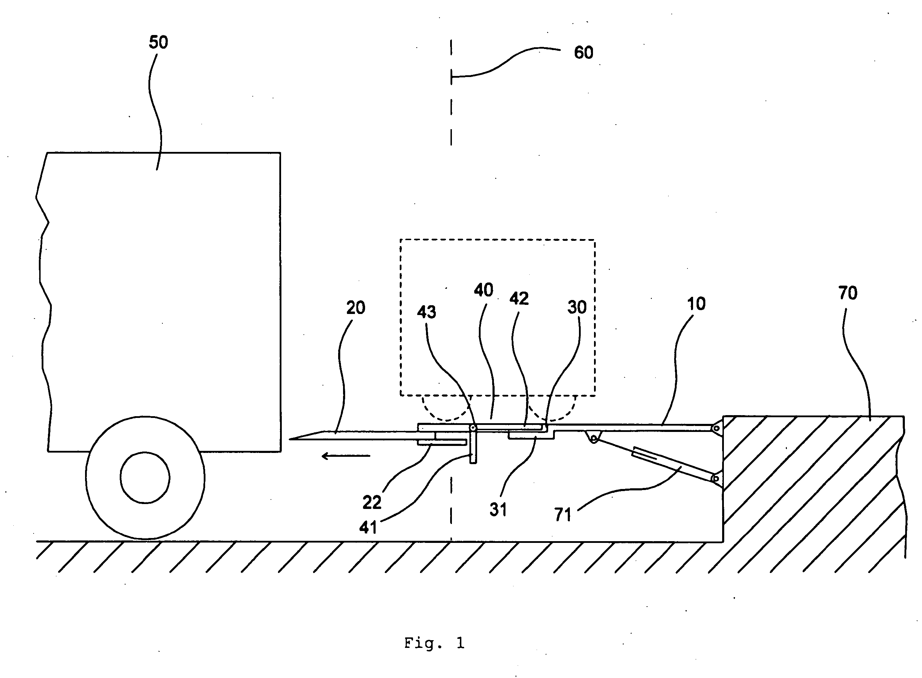

Die Erfindung kann bei verschiedenen Ausführungsformen von Überladebrücken eingesetzt werden. Ein erstes Ausführungsbeispiel wird anhand von Fig. 1 erläutert, in der eine Überladebrücke mit einem Vorschub dargestellt ist.

Die Überladebrücke befindet sich an einem Gebäude, das beispielsweise eine Laderampe 70 aufweisen kann, an welcher die Überladebrücke angebracht ist, um den Abstand und den Höhenunterschied zu einem Fahrzeug 50 zu überbrücken, welches das Gebäude für einen Be- und/oder Entladungsvorgang anfährt.

Die Überladebrücke wird im Wesentlichen durch eine Brückenplatte 10 gebildet. Sie kann ferner einen Stellantrieb 71 umfassen, um das Plateau der Brücke in seiner Gesamtheit in der Höhe zu verschwenken. Zusätzlich weist die Überladebrücke an der dem Gebäude abgewandten Seite einen Vorschub 20 auf, der durch eine weitere Platte gebildet wird. Der Vorschub ist in der Ebene der Brückenplatte 10 verschiebbar und kann dabei zwischen einer Betriebsstellung, einer Ruhestellung und beliebigen Zwischenpositionen bewegt werden. In der Betriebsstellung vergrößert der Vorschub die Fläche der Überladebrücke, um den Abstand zu dem Fahrzeug 50 zu überbrücken. Befindet sich kein Fahrzeug am Gebäude, kann der Vorschub in die Ruhestellung verfahren werden, wobei er sich vorzugsweise unter die Brückenplatte 10 schiebt.

Die Bewegung des Vorschubs erfolgt üblicherweise durch einen Stellantrieb, der in Fig. 1 nicht explizit dargestellt ist. Der Antrieb kann durch übliche hydraulische, pneumatische oder mechanische Antriebe realisiert werden.

Innerhalb der Fläche der Brückenplatte 10 befindet sich wenigstens eine Aussparung 30. Die Aussparung ist beispielsweise rechteckig ausgeformt und erstreckt sich quer zur Bewegungsrichtung des Vorschubs. Innerhalb der Aussparung ist eine Sperrvorrichtung 40 angeordnet. Die Sperrvorrichtung besteht wenigstens aus einem Stellbauteil 41 und einem Sperrbauteil 42, die in einem Winkel zueinander stehen. Das Sperrbauteil dient im ausgefahrenen Zustand als Sperre, während das Stellbauteil zur Ansteuerung der Sperrvorrichtung dient. Die Sperrvorrichtung ist durch ein Winkelprofil, bestehend aus zwei Platten, gebildet . Vorzugsweise stehen die Platten in einem Winkel von etwa 90° zueinander, wobei der das Sperrbauteil bildende Schenkel zweckmäßigerweise länger ist als der das Stellbauteil bildende Schenkel. Je nach Bauform der Überladebrücke und den sich ergebenden Platzverhältnissen können jedoch auch andere Winkel oder Abmessungen zweckmäßig sein.

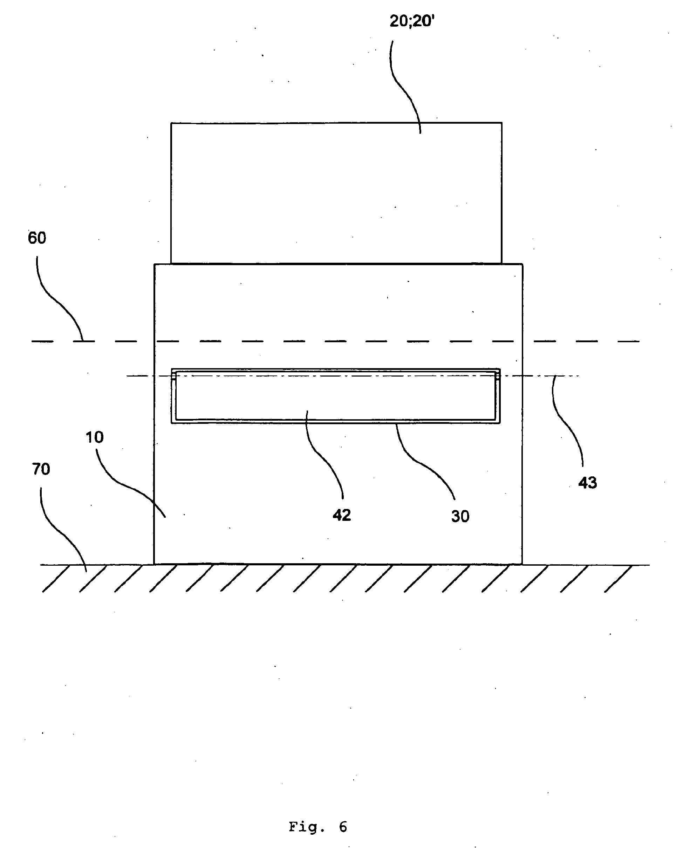

Die Sperrvorrichtung ist um eine Achse 43 drehbar in der Brückenplatte 10 gelagert, wobei sich die Drehachse in der Stoßkante des Winkelprofils befindet. Die Drehachse 43 verläuft dabei in der Ebene der Brückenplatte und quer zur Bewegungsrichtung des Vorschubs 20. Dies ist der Aufsicht in Fig. 6 ebenfalls zu entnehmen.

Die Abmessungen der Sperrvorrichtung 40 sind so gewählt, dass sie sich innerhalb der Aussparung 30 frei um ihre Drehachse 43 drehen kann, wobei das Sperrbauteil 42 die Aussparung 30 jedoch fast vollständig ausfüllt, um innerhalb der Brückenplatte eine annähernd durchgehende Fläche zu schaffen. Dabei liegt die Drehachse 43 zweckmäßigerweise auf der dem Gebäude abgewandten Seite der Aussparung, wie es in den Figuren 1 und 6 dargestellt ist.

Innerhalb der Brückenplatte können auch mehrere Aussparungen mit jeweils einer Sperrvorrichtung angeordnet sein. Jede der Sperrvorrichtungen ist dabei an die Bewegung der jeweiligen Brückenerweiterung gekoppelt. Ferner muss die Sperrvorrichtung nicht direkt in der Ebene der Brückenplatte gelagert sein, sondern die Drehachse kann sich auch geringfügig oberhalb oder unterhalb der Brückenplatte befinden. Beispielsweise kann auf der Brückenplatte eine weitere Platte angebracht sein, an der die Sperrvorrichtung drehbar gelagert befestigt ist. Diese Platte sollte sich nur soweit oberhalb der Brückenplatte befinden, dass sie noch von Gegenständen wie Rollwagen überfahren werden kann.

Die Sperrvorrichtung 40 ist so ausgebildet, dass ihr Sperrbauteil in der Betriebsstellung des Vorschubs 20 in der Ebene der Brückenplatte liegt, so dass es beim Betrieb der Überladebrücke kein Hindernis darstellt. Das Sperrbauteil kann in dieser Stellung auf einer Auflage 31 aufliegen, die sich unterhalb der Brückenplatte 10 befindet. Die Auflage kann an der Brückenplatte befestigt sein oder beispielsweise durch einen Gebäudeteil gebildet werden. Die Auflage 31 stützt die Sperrvorrichtung ab, wenn das Sperrbauteil von oben belastet wird. Das Stellbauteil 41 weist in dieser Stellung nach unten, wie es in Fig. 1 dargestellt ist. In diesem Zustand können Gegenstände und insbesondere rollende Behälter über die Überladebrücke bewegt werden. Das Sperrbauteil der Sperrvorrichtung liegt vorzugsweise so auf der Auflage 31 auf, dass keine Stolperkante entsteht.

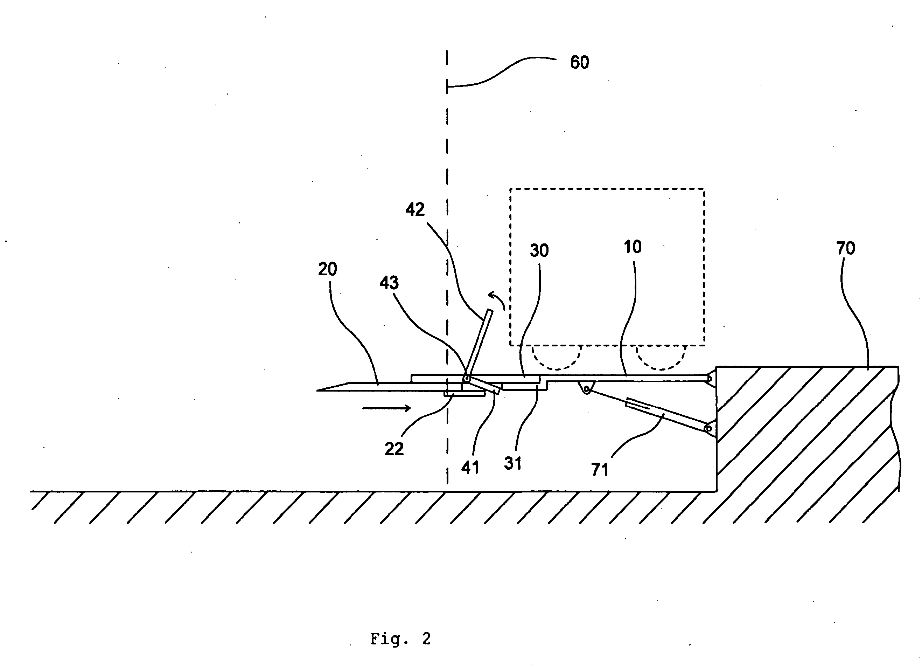

Wird der Vorschub 20 in die Ruhestellung bewegt, dreht sich die Sperrvorrichtung 40 durch eine mechanische Kopplung des Vorschubs mit dem Stellbauteil so um die Drehachse 43, dass sich das Sperrbauteil 42 aus der Ebene der Brückenplatte 10 heraushebt. Diese Bewegung des Vorschubs in die Ruhestellung ist in Fig. 2 abgebildet. Für die mechanische Kopplung weist der Vorschub in diesem Ausführungsbeispiel ein Koppelbauteil 22 auf, das an dem Vorschub befestigt ist. Bei dem Koppelbauteil handelt es sich beispielsweise um eine Platte oder eine Stange, die parallel zum Vorschub verläuft. Die Abmessungen des Koppelbauteils sind so gewählt, dass es bei einer Bewegung des Vorschubs in Richtung des Gebäudes 70 das Stellbauteil 41 berührt und bei der weiteren Bewegung eine Schubkraft (Druckkraft) auf das Stellbauteil ausübt.

Durch die Hebelwirkung dreht sich die Sperrvorrichtung 40 um ihre Achse 40 und das Sperrbauteil 42 hebt sich aus der Ebene der Brückenplatte 10 heraus. Das Koppelbauteil 22 stößt von unten gegen die Auflage 31 oder eine andere Begrenzung. In dieser Ruhestellung des Vorschubs bildet das Sperrbauteil 42 somit eine Sperre auf der Überladebrücke. Insbesondere Rollbehälter werden an der Sperre gestoppt und werden am Weiterrollen gehindert. Dadurch wird nicht nur ein Abstürzen von Gegenständen von der vorderen Kante der Überladebrücke verhindert, sondern da die Sperrvorrichtung an einer beliebigen Stelle in der Brückenplatte vorgesehen werden kann, kann auch das Rollen von Behältern gegen eine Toranlage verhindert werden, die sich in einem Abstand vor der Brückenkante befindet. Die Position einer Toranlage ist in den Figuren 1-4 schematisch durch eine gestrichelte Linie dargestellt.

Wird der Vorschub wieder nach vorne in die Betriebsstellung verfahren, lässt die Druckkraft auf das Stellbauteil 41 nach und die Sperrvorrichtung 40 dreht sich aufgrund der Schwerkraft um die Drehachse 43 zurück in die Ausgangsstellung, in der das Sperrbauteil 42 in der Ebene der Brückenplatte liegt und kein Hindernis darstellt. Um für diese Rückbewegung die Schwerkraft nutzen zu können, kann das Sperrbauteil 42 schwerer sein als das Stellbauteil, so dass das Gewicht eine vollständige Absenkung der Sperrvorrichtung in die Aussparung 30 bewirkt. Dazu kann beispielsweise vorgesehen sein, dass das Stellbauteil der kürzere Schenkel eines Winkelprofils ist.

Ferner kann es zweckmäßig sein, dass das Sperrbauteil 42 in der Ruhestellung des Vorschubs 20 nicht vollständig senkrecht aus der Brückenplatte 10 herausragt, sondern in einem Winkel kleiner 90° zur Brückenplatte steht. Lässt die Schubkraft auf das Stellbauteil 41 nach, senkt sich das Sperrbauteil automatisch ab. Beim Anheben des Sperrbauteils 42 sollte das Stellbauteil 41 jedoch zumindest soweit nach oben geschwenkt werden, das die Aussparung 30 von ihm weitestgehend von unten abgedeckt wird. So kann vermieden werden, dass Gegenstände durch die Aussparung fallen oder durch die Aussparung eine Gefährdung für Personen darstellt.

In einem weiteren Ausführungsbeispiel der Erfindung ist ein Rückstellmechanismus vorgesehen, der die Sperrvorrichtung bei nachlassender Schubkraft auf das Stellbauteil wieder in die Ausgangsstellung zurückdreht, in der das Sperrbauteil in der Ebene der Brückenplatte liegt. Dazu kann beispielsweise ein Federmechanismus mit einer Feder vorgesehen sein, die sich beim Anheben der Sperre spannt. Lässt die Schubkraft nach, drückt die Feder die Sperrvorrichtung zurück in ihre Ausgangsposition.

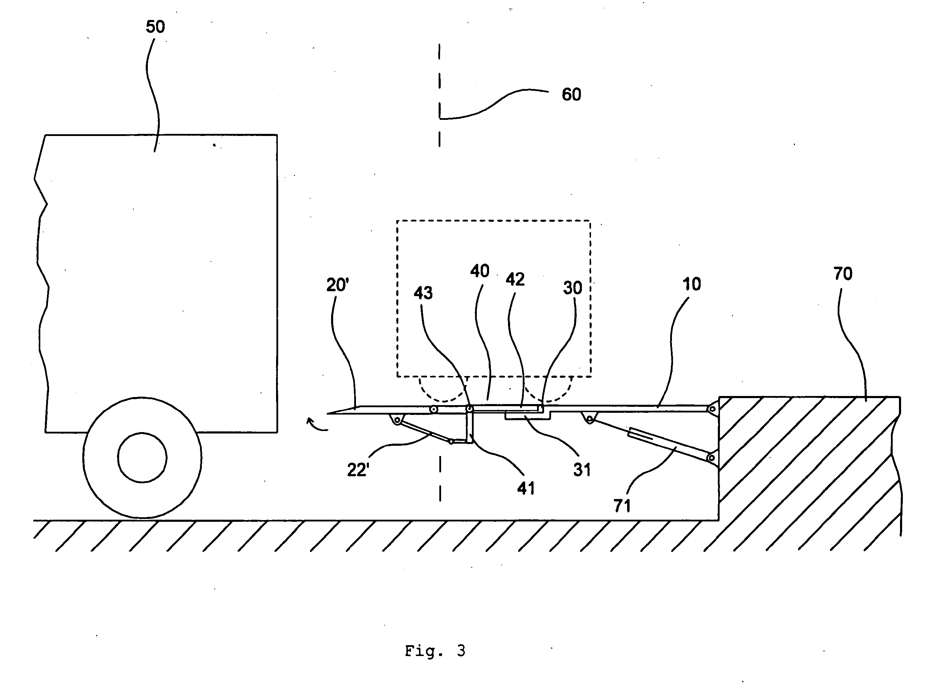

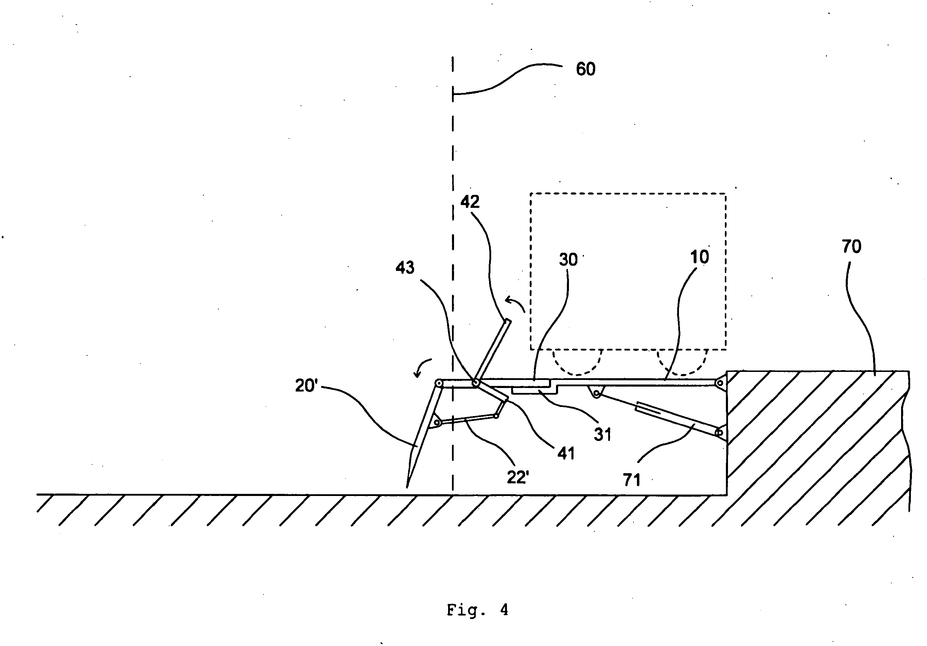

Ein weiteres Ausführungsbeispiel der Erfindung ist den Figuren 3 und 4 zu entnehmen. In diesem Ausführungsbeispiel ist die Überladebrücke mit einem Klappkeil 20' ausgestattet, der den Abstand zu einem Fahrzeug 50 überbrückt. Die verschiedenen Ausführungen der übrigen Bauteile der Überladebrücke können analog auf dieses Ausführungsbeispiel angewendet werden und werden nicht nochmals erläutert.

Der Klappkeil 20' ist an der vorderen Kante der Brückenplatte 10 über eine Kippachse 21 klappbar. In Fig. 3 befindet sich der Klappkeil in seiner Betriebsstellung in der gleichen Ebene wie die Brückenplatte. Der Keil kann jedoch auch weiter nach oben geklappt werden. Die Bewegung des Klappkeils erfolgt vorzugsweise über einen nicht dargestellten Stellantrieb, der ebenfalls hydraulisch, pneumatisch oder mechanisch betätigt werden kann.

Der Klappkeil 20' ist über eine Koppelstange 22' mit dem Stellbauteil 41 der Sperrvorrichtung 40 verbunden. Die Koppelstange ist an ihren Enden drehbar gelagert jeweils mit dem Klappteil und der Sperrvorrichtung verbunden. In der Betriebsstellung des Klappkeils liegt das Sperrbauteil in der Ebene der Brückenplatte 10.

Wird der Klappkeil nicht mehr benötigt, wird er in seine Ruhestellung verfahren, indem er nach unten geklappt wird. Durch die Koppelstange 22' wird dabei eine Schubkraft auf das Stellbauteil 41 ausgeübt, wobei sich die Sperrvorrichtung durch die Hebelwirkung um ihre Drehachse 43 dreht. Das Sperrbauteil 42 hebt sich aus der Ebene der Brückenplatte nach oben heraus und stellt so eine Sperre dar.

Wird der Klappkeil wieder in eine Betriebsstellung verfahren, erzeugt die Koppelstange eine Zugkraft auf das Stellbauteil 41 der Sperrvorrichtung und aufgrund der Drehung der Sperrvorrichtung senkt sich das Sperrbauteil wieder zurück in die Ebene der Brückenplatte.

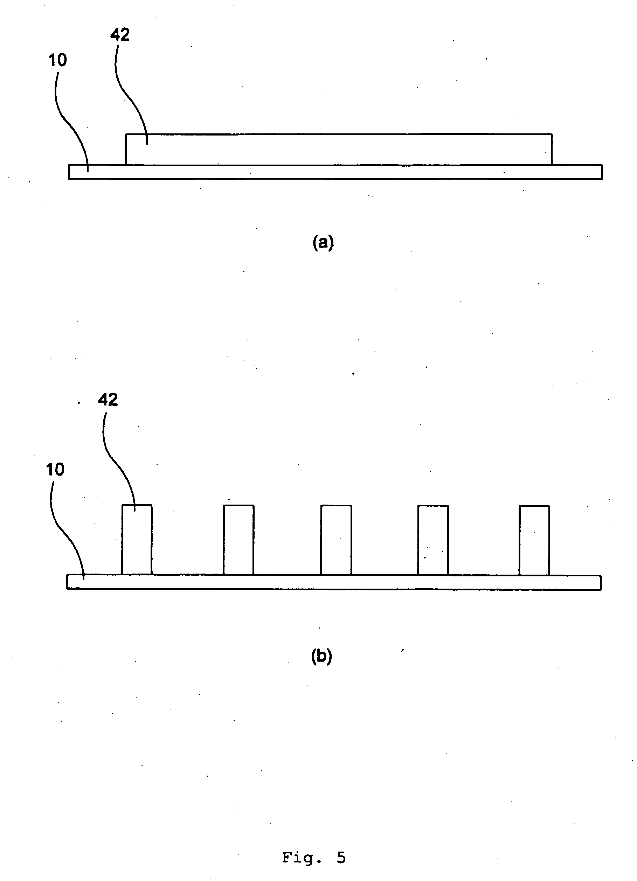

In Fig. 5 sind beispielhaft zwei verschiedene Ausführungsformen von Sperrvorrichtungen dargestellt, deren Angabe jedoch keine einschränkende Wirkung hat. Grundsätzlich können jegliche Formen von Sperrvorrichtungen verwendet werden, die für eine Sperrwirkung geeignet sind. In Fig. 1 a) wird das Sperrbauteil 42, das in der Ruhestellung der Brückenerweiterung aus der Ebene der Brückenplatte 10 herausragt, durch eine durchgehende Platte gebildet. Die Höhe der Platte ist so gewählt, dass Gegenstände, deren Bewegung gestoppt werden soll, aufgehalten werden. Haben die Gegenstände Rollen oder Räder, sollte das Sperrbauteil so weit aus der Ebene der Brückenplatte herausragen, dass die Gegenstände nicht über die Sperre hinwegrollen können.

In Fig. 5 b) ist ein zweites Ausführungsbeispiel einer Sperrvorrichtung dargestellt, bei dem das aus der Ebene der Brückenerweiterung herausragende Sperrbauteil in mehrere Segmente aufgeteilt ist. Dies kann beispielsweise durch Einbringen von Einkerbungen in eine Platte realisiert werden, wobei die Einkerbungen im Wesentlichen senkrecht zur Drehachse 43 der Sperrvorrichtung verlaufen. Die Höhe der einzelnen Segmente sollte ebenfalls so gewählt werden, dass insbesondere Gegenstände mit Rollen oder Rädern nicht über sie hinwegrollen können. Die Breite der Einkerbungen sollte zweckmäßigerweise kleiner sein als die Gegenstände, die gegen die Sperre rollen könnten.

Neben durchgehenden oder segmentierten Platten können als Sperrvorrichtungen ferner beispielsweise Stäbe oder Gitter vorgesehen sein. Darüber hinaus kann es zweckmäßig sein, das Sperrbauteil an seiner Unterseite mit einer sichtbaren Markierung zu versehen, um Personen auf die Sperre hinzuweisen, wenn diese nach oben aus der Brückenplatte ragt.

### Bezugszeichenliste:

- 10: Brückenplatte
- 20,20': Brückenerweiterung, Vorschub, Klappkeil
- 21: Drehachse des Klappkeils
- 22,22': Koppelbauteil, Platte, Stange, Koppelstange
- 30: Aussparung
- 31: Auflage
- 40: Sperrvorrichtung, Winkelprofil
- 41: Stellbauteil
- 42: Sperrbauteil
- 43: Drehachse der Sperrvorrichtung
- 50: Fahrzeug
- 60: Toranlage
- 70: Laderampe, Gebäude
- 71: Stellantrieb Überladebrücke

## Patentansprüche

1. Überladebrücke mit einer Brückenplatte (10) und einer beweglichen, plattenförmigen Brückenerweiterung (20;20'), die sich auf der einem Gebäude abgewandten Seite der Brückenplatte (10) befindet, wobei die Brückenerweiterung (20;20') wenigstens zwischen einer Betriebsstellung und einer Ruhestellung bewegbar ist und die Brückenplatte (10) in der Betriebsstellung durch die Brückenerweiterung (20;20') wenigstens auf der dem Gebäude abgewandten Seite vergrößerbar ist, wobei sich ferner innerhalb der Fläche der Brückenplatte (10) mindestens eine Aussparung (30) befindet, in der eine Sperrvorrichtung (40) angeordnet ist, die wenigstens aus einem Sperrbauteil (42) und einem in einem Winkel dazu stehenden Stellbauteil (41) gebildet ist, wobei die beiden Bauteile (41;42) entlang ihrer Stoßkante drehbar um eine Achse (43) gelagert sind, und das Stellbauteil (41) mechanisch an die Brückenerweiterung (20;20') koppelbar ist, und dass die Sperrvorrichtung (40) in der Betriebsstellung der Brückenerweiterung (20;20') so positioniert ist, dass das Sperrbauteil (42) der Sperrvorrichtung (40) in der Ebene der Brückenplatte (10) liegt, und dass die Sperrvorrichtung (40) in der Ruhestellung der Brückenerweiterung (20;20') mittels einer mechanischen Kopplung des Stellbauteils (41) an die Brückenerweiterung (20;20') so positioniert ist, dass das Sperrbauteil (42) der Sperrvorrichtung (40) nach oben aus der Brückenplatte (10) herausragt, **dadurch gekennzeichnet,**
**dass** die Sperrvorrichtung (40) als Winkelprofil aus zwei Platten (41;42) gebildet ist, das an der Stoßkante der Platten um eine Drehachse (43) gelagert ist.

2. Überladebrücke nach Anspruch 1,
**dadurch gekennzeichnet,**
**dass** sich in der zweiten Platte (42) Einkerbungen befinden, die im Wesentlichen senkrecht zur Drehachse (43) verlaufen.

3. Überladebrücke nach einem oder beiden der Ansprüche 1 und 2,
**dadurch gekennzeichnet,**
**dass** die Brückenerweiterung (20) ein Koppelbauteil (22;22') aufweist, das so ausgebildet ist, dass es bei einer Bewegung der Brückenerweiterung (20) in die Ruhestellung eine Kraft auf das Stellbauteil (41) ausübt und dadurch die Sperrvorrichtung (40) so um die Achse (43) drehbar ist, dass sich das Sperrbauteil (42) der Sperrvorrichtung nach oben aus der Ebene der Brückenplatte (10) hebt, wobei die Sperrvorrichtung (40) so ausgebildet ist, dass sich das Sperrbauteil (42) bei einer Bewegung der Brückenerweiterung (20) in die Betriebsstellung in die Ebene der Brückenplatte (10) absenkt.

4. Überladebrücke nach einem oder mehreren der Ansprüche 1 bis 3,
**dadurch gekennzeichnet,**
**dass** die Brückenerweiterung (20) ein Vorschub ist, der in der Ebene der Brückenplatte (10) verfahrbar ist.

5. Überladebrücke nach Anspruch 3 und 4,
**dadurch gekennzeichnet,**
**dass** das Koppelbauteil (22) eine Platte oder Stange ist, die an dem Vorschub (20) befestigt ist und dass das Koppelbauteil (22) so ausgebildet ist, dass es bei einer Bewegung des Vorschubs (20) in die Ruhestellung das Stellbauteil (41) berührt und eine Druckkraft auf das Stellbauteil (41) ausübt.

6. Überladebrücke nach einem oder beiden der Ansprüche 1 und 2,
**dadurch gekennzeichnet,**
**dass** die Brückenerweiterung (20) ein Klappkeil ist, der um eine Achse (21) kippbar ist.

7. Überladebrücke nach Anspruch 3 und 6,
**dadurch gekennzeichnet,**
**dass** das Koppelbauteil (22') eine Koppelstange ist, die an ihren Enden drehbar gelagert sowohl mit dem Klappkeil (20) als auch mit dem Stellbauteil (41) der Sperrvorrichtung (40) verbunden ist.

8. Verfahren zum Betreiben einer Überladebrücken mit einer Brückenplatte (10) und einer beweglichen, plattenförmigen Brückenerweiterung (20;20'), die sich auf der einem Gebäude abgewandten Seite befindet, wobei die Brückenerweiterung (20; 20') wenigstens zwischen einer Betriebsstellung und einer Ruhestellung bewegt wird und die Brückenerweiterung (20;20') die Brückenplatte (10) in der Betriebsstellung wenigstens auf der dem Gebäude abgewandten Seite vergrößert, wobei ferner eine sich innerhalb der Fläche der Brückenplatte (10) in einer Aussparung (30) befindliche Sperrvorrichtung (40), die wenigstens aus einem Stellbauteil (41) und einem in einem Winkel dazu stehenden Sperrbauteil (42) gebildet wird, wobei die beiden Bauteile (41;42) entlang ihrer Stoßkante drehbar um eine Achse (43) gelagert sind, bei einer Bewegung der Brückenerweiterung (20;20') in die Ruhestellung mittels einer mechanischen Kopplung des Stellbauteils (41) mit der Brückenerweiterung (20;20') in eine Position bewegt wird, in der das Sperrbauteil (42) der Sperrvorrichtung (40) nach oben aus der Brückenplatte (10) herausragt, und dass die Sperrvorrichtung (40) bei einer Bewegung der Brückenerweiterung (20;20') in die Betriebsstellung in eine Position bewegt wird, in der das Sperrbauteil (42) der Sperrvorrichtung (40) in der Ebene der Brückenplatte (10) liegt,
**dadurch gekennzeichnet,**
**dass** die Sperrvorrichtung (40) als Winkelprofil aus zwei Platten (41;42) gebildet ist, das sich bei Bewegen der Brückenerweiterung (20;20') zwischen einer Betriebsstellung und einer Ruhestellung um eine Drehachse (43) an der Stoßkante der Platten (41;42) dreht.

9. Verfahren nach Anspruch 8,
**dadurch gekennzeichnet,**
**dass** ein Koppelbauteil (22;22') der Brückenerweiterung (20) bei einer Bewegung der Brückenerweiterung (20) in die Ruhestellung eine Kraft auf das Stellbauteil (41) ausübt und sich die Sperrvorrichtung (40) dadurch so um die Achse (43) dreht, dass sich das Sperrbauteil (42) der Sperrvorrichtung nach oben aus der Ebene der Brückenplatte (10) hebt, wobei sich das Sperrbauteil (42) bei einer Bewegung der Brückenerweiterung (20) in die Betriebsstellung in die Ebene der Brückenplatte (10) absenkt.

10. Verfahren nach einem oder beiden der Ansprüche 8 und 9,
**dadurch gekennzeichnet,**
**dass** die Brückenerweiterung (20) ein Vorschub ist, der in der Ebene der Brückenplatte (10) verfahren wird.

11. verfahren nach Anspruch 9 und 10,
**dadurch gekennzeichnet,**
**dass** das Koppelbauteil (22) eine Platte oder Stange ist, die an dem Vorschub (20) befestigt ist und dass das Koppelbauteil (22) bei einer Bewegung des Vorschubs (20) in die Ruhestellung das Stellbauteil (41) berührt und eine Druckkraft auf das Stellbauteil (41) ausübt.

12. Verfahren nach Anspruch 11,
**dadurch gekenntzeichnet,**
**dass** die Sperrvorrichtung (40) bei einer Bewegung des Vorschubs (20) in die Betriebsstellung durch die Schwerkraft so um die Achse (43) gedreht wird, dass sich das Sperrbauteil (42) in die Ebene der Brückenplatte (10) absenkt.

13. Verfahren einem oder beiden der Ansprüche 8 und 9,
**dadurch gekennzeichnet,**
**dass** die Brückenerweiterung (20) ein Klappkeil ist, der um eine Achse (21) gekippt wird.

14. Verfahren nach Anspruch 9 und 13,
**dadurch gekennzeichnet,**
**dass** das Koppelbauteil (22') eine Koppelstange ist, die an ihren Enden drehbar gelagert sowohl mit dem Klappkeil (20) als auch mit dem Sperrbauteil (42) der Sperrvorrichtung (40) verbunden ist und dass die Koppelstange (22') bei einer Bewegung des Klappkeils (20') in die Ruhestellung eine Schubkraft auf das Stellbauteil (41) ausübt.

15. Verfahren nach Anspruch 14,
**dadurch gekennzeichnet,**
**dass** die Koppelstange (22') bei einer Bewegung des Klappkeils (20') in die Betriebsstellung eine Zugkraft auf das Stellbauteil (41) ausübt und die Sperrvorrichtung (40) dadurch so um die Achse (43) gedreht wird, dass sich das Sperrbauteil (42) in die Ebene der Brückenplatte (10) absenkt.

## Claims

1. A loading ramp having a ramp plate (10) and a movable, plate-like ramp extension (20; 20') that is located on the side of the ramp plate (10) facing away from a building, whereby the ramp extension (20; 20') can be moved at least between an operating position and a resting position, and, in the operating position, the ramp plate (10) can be enlarged by the ramp extension (20; 20') at least on the side facing away from the building, whereby moreover, within the surface area of the ramp plate (10), there is at least one recess (30) in which a locking mechanism (40) is arranged that consists of at least a locking component (42) and, at an angle thereto, an adjusting component (41), whereby the two components (41; 42) are rotatably mounted along their abutting edge around an axis (43), and the adjusting component (41) can be mechanically coupled to the ramp extension (20; 20'), and in that, in the operating position of the ramp extension (20; 20'), the locking mechanism (40) is positioned in such a way that the locking component (42) of the locking mechanism (40) lies in the plane of the ramp plate (10), and in that, in the resting position of the ramp extension (20; 20'), the locking mechanism (40) is positioned on the ramp extension (20; 20') by means of a mechanical coupling of the adjusting component (41) in such a way that the locking component (42) of the locking mechanism (40) extends upwards out of the ramp plate (10),
**characterized in that**
the locking mechanism (40) is configured as an angled profile that is made up of two plates (41; 42) and that is mounted around a rotational axis (43) on the abutting edge of the plates.

2. The loading ramp according to Claim 1,
**characterized in that**
there are notches in the second plate (42) that run essentially perpendicular to the rotational axis (43).

3. The loading ramp according to one or both of Claims 1 and 2,
**characterized in that**
the ramp extension (20) has a coupling component (22; 22') that is configured in such a way that, when the ramp extension (20) moves into the resting position, it exerts a force onto the adjusting component (41), as a result of which the locking mechanism (40) can rotate around the axis (43) in such a way that the locking component (42) of the locking mechanism extends upwards out of the plane of the ramp plate (10), whereby the locking mechanism (40) is configured in such a way that, when the ramp extension (20) moves into the operating position, the locking component (42) is lowered into the plane of the ramp plate (10).

4. The loading ramp according to one or more of Claims 1 to 3,
**characterized in that**
the ramp extension (20) is a feed mechanism that can be moved in the plane of the ramp plate (10).

5. The loading ramp according to Claims 3 and 4,
**characterized in that**
the coupling component (22) is a plate or a rod that is attached to the feed mechanism (20), and **in that** the coupling component (22) is configured in such a way that, when the feed mechanism (20) moves into the resting position, the coupling component (22) touches the adjusting component (41) and exerts a compressive force onto the adjusting component (41).

6. The loading ramp according to one or both of Claims 1 and 2,
**characterized in that**
the ramp extension (20) is a folding wedge that can tilt around an axis (21).

7. The loading ramp according to Claims 3 and 6,
**characterized in that**
the coupling component (22') is a coupling rod that is mounted rotatably at its ends so as to be connected to the folding wedge (20) as well as to the adjusting component (41) of the locking mechanism (40).

8. A method for operating a loading ramp having a ramp plate (10) and a movable, plate-like ramp extension (20; 20') that is located on the side facing away from a building, whereby the ramp extension (20; 20') is moved at least between an operating position and a resting position, and, in the operating position, the ramp extension (20; 20') enlarges the ramp plate (10) at least on the side facing away from the building, whereby moreover, a locking mechanism (40) consisting of at least an adjusting component (41) and a locking component (42) at an angle thereto is located in a recess (30) on the surface of the ramp plate (10), whereby the two components (41; 42) are rotatably mounted along their abutting edge around an axis (43), and, when the ramp extension (20; 20') moves into the resting position by means of a mechanical coupling of the adjusting component (41), and the locking mechanism (40) is moved, along with the ramp extension (20; 20'), into a position in which the locking component (42) of the locking mechanism (40) extends upwards out of the ramp plate (10), and in that, when the ramp extension (20; 20') moves into the operating position, the locking mechanism (40) is moved into a position in which the locking component (42) of the locking mechanism (40) lies in the plane of the ramp plate (10),
**characterized in that**
the locking mechanism (40) is configured as an angled profile made up of two plates (41; 42) that, when the ramp extension (20; 20') moves between an operating position and a resting position, rotates around a rotational axis (43) on the abutting edge of the plates (41; 42).

9. The method according to claim 8,
**characterized in that,**
when the ramp extension (20) moves into the resting position, a coupling component (22; 22') of the ramp extension (20) exerts a force onto the adjusting component (41), as a result of which the locking mechanism (40) rotates around the axis (43) in such a way that the locking component (42) of the locking mechanism extends upwards out of the plane of the ramp plate (10), whereby, when the ramp extension (20) moves into the operating position, the locking component (42) is lowered into the plane of the ramp plate (10).

10. The method according to one or both of Claims 8 and 9,
**characterized in that**
the ramp extension (20) is a feed mechanism that is moved in the plane of the ramp plate (10).

11. The method according to Claims 9 and 10,
**characterized in that**
the coupling component (22) is a plate or a rod that is attached to the feed mechanism (20), and **in that**, when the feed mechanism (20) moves into the resting position, the coupling component (22) touches the adjusting component (41) and exerts a compressive force onto the adjusting component (41).

12. The method according to Claim 11,
**characterized in that,**
when the feed mechanism (20) moves into the operating position, the locking mechanism (40) is rotated around the axis (43) by the force of gravity so that the locking component (42) is lowered into the plane of the ramp plate (10).

13. The method according to one or both of Claims 8 and 9,
**characterized in that**
the ramp extension (20) is a folding wedge that is tilted around an axis (21).

14. The method according to Claims 9 and 13,
**characterized in that**
the coupling component (22') is a coupling rod that is rotatably mounted at its ends and that is connected to the folding wedge (20) as well as to the locking component (42) of the locking mechanism (40), and **in that**, when the folding wedge (20') moves into the resting position, the coupling rod (22') exerts a shear force onto the adjusting component (41).

15. The method according to Claim 14,
**characterized in that,**
when the folding wedge (20') moves into the operating position, the coupling rod (22') exerts a tractive force onto the adjusting component (41), as a result of which the locking mechanism (40) is rotated around the axis (43) in such a way that the locking component (42) is lowered into the plane of the ramp plate (10).

## Revendications

1. Pont de transbordement avec une plaque de pont (10) et une rallonge de pont (20 ; 20') mobile en forme de plaque qui se trouve sur le côté de la plaque de pont (10) détourné d'un bâtiment, la rallonge de pont (20 ; 20') pouvant être déplacé au moins entre une position de service et une position de repos et la plaque de pont (10) pouvant, dans la position de service, être agrandie par la rallonge de pont (20 ; 20') au moins sur le côté détourné du bâtiment, au moins un évidement (30) se trouvant, en outre, dans la surface de la plaque de pont (10), dans lequel est situé un dispositif de blocage (40) qui est formé au moins par un composant de blocage (42) et un composant d'actionnement (41) formant un angle avec celui-ci, les deux composants (41, 42) étant logés de manière rotative autour d'un axe (43) le long de leur bord d'aboutement et le composant d'actionnement (41) pouvant être couplé mécaniquement à la rallonge de pont (20 ; 20'), et le dispositif de blocage (40) étant positionné, dans la position de service de la rallonge de pont (20 ; 20'), de manière telle que le composant de blocage (42) du dispositif de blocage (40) se trouve dans le plan de la plaque de pont (10), et le dispositif de blocage (40) étant positionné, dans la position de repos de la rallonge de pont (20 ; 20') au moyen d'un couplage mécanique du composant d'actionnement (41) à la rallonge de pont (20 ; 20'), de manière telle que le composant de blocage (42) du dispositif de blocage (40) fait saillie vers le haut hors de la plaque de pont (10), **caractérisé en ce que** le dispositif de blocage (40) est formé à partir de deux plaques (41 ; 42) en tant que profilé angulaire qui est logé autour d'un axe de rotation (43) sur le bord d'aboutement des plaques.

2. Pont de transbordement selon la revendication 1, **caractérisé en ce que** se trouvent, dans la deuxième plaque (42), des encoches qui sont sensiblement perpendiculaires à l'axe de rotation (43).

3. Pont de transbordement selon l'une ou les deux revendications 1 et 2, **caractérisé en ce que** la rallonge de pont (20) comporte un composant de couplage (22 ; 22') qui est réalisé de manière telle que, lors d'un mouvement de la rallonge de pont (20) vers la position de repos, il exerce une force sur le composant d'actionnement (41) et le dispositif de blocage (40) est de ce fait prévu de manière rotative autour de l'axe (43) de sorte que le composant de blocage (42) du dispositif de blocage se soulève vers le haut hors du plan de la plaque de pont (10), le dispositif de blocage (40) étant réalisé de manière telle que le composant de blocage (42), lors d'un mouvement de la rallonge de pont (20) vers la position de service, s'abaisse vers le plan de la plaque de pont (10).

4. Pont de transbordement selon l'une ou plusieurs des revendications 1 à 3, **caractérisé en ce que** la rallonge de pont (20) est un élément d'avance qui peut être déplacé dans le plan de la plaque de pont (10).

5. Pont de transbordement selon les revendications 3 et 4, **caractérisé en ce que** le composant de couplage (22) est une plaque, ou une barre, qui est fixée à l'élément d'avance (20) et **en ce que** le composant de couplage (22) est réalisé de manière telle que, lors d'un mouvement de l'élément d'avance (20) vers la position de repos, il touche le composant d'actionnement (41) et exerce une force de pression sur le composant d'actionnement (41) .

6. Pont de transbordement selon l'une ou les deux revendications 1 et 2, **caractérisé en ce que** la rallonge de pont (20) est un taquet basculant qui peut basculer autour d'un axe (21).

7. Pont de transbordement selon les revendications 3 et 6, **caractérisé en ce que** le composant de couplage (22') est une barre de couplage qui, logée de manière rotative en ses extrémités, est reliée non seulement au taquet basculant (20), mais aussi au composant d'actionnement (41) du dispositif de blocage (40).

8. Procédé pour faire fonctionner un pont de transbordement avec une plaque de pont (10) et une rallonge de pont (20 ; 20') mobile en forme de plaque qui se trouve sur le côté détourné d'un bâtiment, la rallonge de pont (20 ; 20') étant déplacé au moins entre une position de service et une position de repos et la rallonge de pont (20 ; 20') agrandissant la plaque de pont (10) dans la position de service au moins sur le côté détourné du bâtiment, un dispositif de blocage (40) qui se trouve dans la surface de la plaque de pont (10) dans un évidement (30) et est formé au moins par un composant d'actionnement (41) et un composant de blocage (42) formant un angle avec celui-ci, les deux composants (41, 42) étant logés de manière rotative autour d'un axe (43) le long de leur bord d'aboutement, étant en outre déplacé, lors d'un mouvement de la rallonge de pont (20 ; 20') vers la position de repos, au moyen d'un couplage mécanique du composant d'actionnement (41) à la rallonge de pont (20 ; 20'), vers une position dans laquelle le composant de blocage (42) du dispositif de blocage (40) fait saillie vers le haut hors de la plaque de pont (10), et le dispositif de blocage (40) étant, lors d'un mouvement de la rallonge de pont (20 ; 20') vers la position de service, déplacé vers une position dans laquelle le composant de blocage (42) du dispositif de blocage (40) se trouve dans le plan de la plaque de pont (10), **caractérisé en ce que** le dispositif de blocage (40) est formé à partir de deux plaques (41 ; 42) en tant que profilé angulaire qui, lors d'un mouvement de la rallonge de pont (20 ; 20') entre une position de service et une position de repos, tourne autour d'un axe de rotation (43) sur le bord d'aboutement des plaques (41 ; 42).

9. Procédé selon la revendication 8, **caractérisé en ce qu'**un composant de couplage (22 ; 22') de la rallonge de pont (20), lors d'un mouvement de la rallonge de pont (20) vers la position de repos, exerce une force sur le composant d'actionnement (41) et le dispositif de blocage (40), de ce fait, tourne autour de l'axe (43) de manière telle que le composant de blocage (42) du dispositif de blocage se soulève vers le haut hors du plan de la plaque de pont (10), le composant de blocage (42), lors d'un mouvement de la rallonge de pont (20) vers la position de service, s'abaissant vers le plan de la plaque de pont (10).

10. Procédé selon l'une ou les deux revendications 8 et 9, **caractérisé en ce que** la rallonge de pont (20) est un élément d'avance qui est déplacé dans le plan de la plaque de pont (10).

11. Procédé selon les revendications 9 et 10, **caractérisé en ce que** le composant de couplage (22) est une plaque, ou une barre, qui est fixée à l'élément d'avance (20) et **en ce que** le composant de couplage (22), lors d'un mouvement de l'élément d'avance (20) vers la position de repos, touche le composant d'actionnement (41) et exerce une force de pression sur le composant d'actionnement (41).

12. Procédé selon la revendication 11, **caractérisé en ce que** le dispositif de blocage (40), lors d'un mouvement de l'élément d'avance (20) vers la position de service, subit, du fait de la gravité, une rotation telle autour de l'axe (43) que le composant de blocage (42) s'abaisse vers le plan de la plaque de pont (10).

13. Procédé selon l'une ou les deux revendications 8 et 9, **caractérisé en ce que** la rallonge de pont (20) est un taquet basculant qui bascule autour d'un axe (21).

14. Procédé selon les revendications 9 et 13, **caractérisé en ce que** le composant de couplage (22') est une barre de couplage qui, logée de manière rotative en ses extrémités, est reliée non seulement au taquet basculant (20), mais aussi au composant de blocage (42) du dispositif de blocage (40) et **en ce que** la barre de couplage (22'), lors d'un mouvement du taquet basculant (20') vers la position de repos, exerce une poussée sur le composant d'actionnement (41).

15. Procédé selon la revendication 14, **caractérisé en ce que** la barre de couplage (22'), lors d'un mouvement du taquet basculant (20') vers la position de service, exerce une force de traction sur le composant d'actionnement (41) et le dispositif de blocage (40) subit de ce fait une rotation telle autour de l'axe (43) que le composant de blocage (42) s'abaisse vers le plan de la plaque de pont (10).
